# EUROPÄISCHE PATENTANMELDUNG

(11) **EP 1 284 560 A1**
(43) Veröffentlichungstag der Anmeldung: **19.02.2003**
(21) Anmeldenummer: 01440268.9
(22) Anmeldetag: 17.08.2001
(51) Int. Cl.: H04L 12/58, G06F 17/60

(54) **Verfahren zum automatischen Verteilen von elektronischen Nachrichten an Teilnehmer eines Datennetzwerkes**

(71) Anmelder: ALCATEL, 75008 Paris (FR)
(72) Erfinder: Hägebarth, Frank, Dipl.-Ing., 74366 Kirchheim (DE); Franke, Gabriele, Dipl.-Ing., 74366 Kirchheim (DE)
(74) Vertreter: Wörz, Volker

(57) **Zusammenfassung**

Die Erfindung betrifft ein Verfahren zum automatischen Verteilen einer elektronischen Nachricht über ein Datennetzwerk (1) an Teilnehmer des Datennetzwerks (1), mit den Schritten:
a)Bestimmen eines Verteilplans (23,25,27,29);
b)Auswählen mindestens eines Zielteilnehmers unter allen Teilnehmern des Datennetzwerks (1) in Abhängigkeit von dem Verteilplan; und
c)Übermitteln der Nachricht an den oder jeden ausgewählten Zielteilnehmer (30).

## Beschreibung

Die vorliegende Erfindung betrifft ein Verfahren zum automatischen Verteilen einer elektronischen Nachricht über ein Datennetzwerk an Teilnehmer des Datennetzwerks. Das Verfahren umfasst die Schritte:
a) Bestimmen eines Verteilplans;
b) Auswählen mindestens eines Zielteilnehmers unter allen Teilnehmern des Datennetzwerks in Abhängigkeit von dem Verteilplan; und
c) Übermitteln der Nachricht an den oder jeden ausgewählten Zielteilnehmer.

Die Erfindung betrifft außerdem einen Server-Computer und einen Client-Computer eines Datennetzwerks. Der Server-Computer und der Client-Computer umfassen jeweils ein Rechengerät, insbesondere einen Mikroprozessor, und ein Speicherelement, insbesondere ein Random-Access-Memory, ein Read-Only-Memory oder ein Flash-Memory. Auf dem Speicherelement ist ein Computerprogramm abgespeichert, das auf dem Rechengerät ablauffähig ist.

Die vorliegende Erfindung betrifft außerdem ein Speicherelement, insbesondere ein Random-Access-Memory, ein Read-Only-Memory oder ein Flash-Memory, für einen Computer, der Teil eines Clients-Server-Datennetzwerks ist. Auf dem Speicherelement ist ein Compuerprogramm abgespeichert, das auf einem Rechengerät, insbesondere auf einem Mikroprozessor, des Comuters ablauffähig ist.

Schließlich betrifft die Erfindung ein Computerprogramm, das auf einem Rechengerät, insbesondere auf einem Mikroprozessor, eines Computers ablauffähig ist.

Aus dem Stand der Technik ist es bekannt, Nachrichten als elektronische Nachrichten, z. B. in Form sog. electronic mails (Emails), zu versenden. In einer Kopfzeile der Emails werden u. a. die Email-Adresse des Adressaten, die Email-Adresse des Absenders, das Absendedatum, die Absendezeit und ein Betreff notiert. Zusätzlich können in der Kopfzeile noch weitere Angaben, bspw. eine IP (Internet Protocol)-Adresse des Adressaten oder des Absenders, enthalten sein. Diese Angaben sind jedoch in der Regel für den Adressaten nicht ohne weiteres lesbar.

Das Versenden der Email geschieht über ein Datennetzwerk, das bspw. als das Internet oder unternehmensintern als ein sog. Intranet ausgebildet ist. Sowohl über das Internet als auch über das Intranet können elektronische Nachrichten nach dem IP (Internet Protocol)-Standard übermittelt werden.

Derzeit gebräuchliche Email-Systeme umfassen in der Regel einen Email-Server und mehrere Email-Clients. Eingehende Emails werden in dem Email-Server entweder in einer zentralen Mailbox oder für verschiedene Adressaten in verschiedenen Mailboxes gespeichert und dort von den Email-Clients entweder automatisch oder auf Befehl eines Teilnehmers abgeholt. Alternativ können die Emails auch durch einen herkömmlichen Webbrowser von dem Email-Server abgeholt werden.

Ein Teilnehmer kann eine Mailbox, die für ihn auf dem Email-Server eingerichtet ist, manuell konfigurieren. So kann bspw. ein unbedingtes Weiterleiten der eingegangenen Emails an einen weiteren vorgebbaren Teilnehmer des Datennetzwerks oder das unbedingte Senden einer automatischen Antwort an den Absender einer Email eingestellt werden. Dadurch kann bspw. bei Abwesenheit eines Teilnehmers sichergestellt werden, dass dringende Emails, die eigentlich an ihn gerichtet sind, an anwesende Teilnehmer zur Bearbeitung weitergeleitet werden, oder aber dass der Absender der Email zumindest über die Abwesenheit des Teilnehmers informiert wird. Die Konfiguration der Mailbox erfolgt mittels spezieller Clients oder über den Webbrowser.

Aus der US 5,892,909 ist ein Verfahren und ein System zum Verteilen von elektronischen Nachrichten an Teilnehmer eines unternehmensinternen Intranets bekannt. In dieser Druckschrift wird vorgeschlagen, die Nachrichten nach einem Verteilplan an die Teilnehmer zu verteilen. Der Verteilplan wird an personelle Änderung in dem Unternehmen automatisch adaptiert, so dass aktuelle und relevante Nachrichten jeweils an geeignete und berechtigte Teilnehmer verteilt werden. Mit Hilfe des bekannten Verfahrens kann der Verteilplan für die Verteilung elektronischer Nachrichten in einem Unternehmen bspw. nach einer Umstrukturierung oder einer Neuorganisation besonders schnell aktualisiert werden.

Bei dem aus der US 5,892,909 bekannten Verfahren wird der Verteilplan nur in Abhängigkeit von der Personalstruktur in einem Unternehmen bestimmt. Es handelt sich also auch bei diesem Verfahren um ein unbedingtes Weiterleiten von elektronischen Nachrichten.

Die aus dem Stand der Technik bekannten Verfahren zum automatischen Verteilen von elektronischen Nachrichten haben den Nachteil, dass sie nur einen äußerst beschränkten Funktionsumfang haben, der sich auf ein unbedingtes Weiterleiten von Nachrichten an einen oder mehrere vorgebbare Zielteilnehmer und auf eine automatische Rückantwort an den Absender der Nachrichten beschränkt. Ein Teilnehmer des Datennetzwerks hat nicht die Möglichkeit, seine Mailbox oder den Email-Server individuell zu konfigurieren.

Der vorliegenden Erfindung liegt deshalb die Aufgabe zugrunde, die Funktionalitäten für das automatische Verteilen von elektronischen Nachrichten zu erweitern, um Teilnehmern einerseits den Umgang mit den elektronischen Nachrichten zu erleichtern und andererseits den größtmöglichen Nutzen aus der Kommunikation über elektronische Nachrichten zu ziehen.

Zur Lösung dieser Aufgabe wird ausgehend von dem Verfahren der eingangs genannten Art vorgeschlagen, dass der Verteilplan in Abhängigkeit davon bestimmt wird, ob vorgebbare teilnehmer- oder nachrichtenbezogene Bedingungen erfüllt sind.

Erfindungsgemäß werden nicht nur die üblichen Verteilfunktionalitäten, unbedingtes Weiterleiten und/oder unbedingte Rückantwort, sondern darüber hinaus erweiterte Funktionalitäten vorgeschlagen. Kern der erweiterten Funktionalitäten ist, dass das Weiterleiten und die Rückantwort an Bedingungen geknüpft sind. Dabei kann es sich um nachrichtenbezogene Bedingungen handeln, die sich aus den elektronischen Nachrichten selbst (Ursprung bzw. Absender, Absendedatum oder Absendezeit) ergeben. Außerdem kann es sich um teilnehmerbezogene Bedingungen handeln, die sich aus dem Teilnehmer, für den die Nachricht bestimmt ist, bzw. aus den mit ihm verknüpften Angaben (Lagerzeit der elektronischen Nachrichten in einer Mailbox des Teilnehmers oder Auslastung des Teilnehmers mit elektronischen Nachrichten) ergeben.

Gemäß einer vorteilhaften Weiterbildung der vorliegenden Erfindung wird vorgeschlagen, dass der Verteilplan in Abhängigkeit von der Auslastung der Teilnehmer bestimmt wird. Die aktuelle Auslastung eines Teilnehmers kann bspw. anhand der in seiner Mailbox befindlichen unbearbeiteten elektronischen Nachrichten ermittelt werden. Es ist aber auch denkbar, dass jeder Teilnehmer eine vorgebbare Anzahl an elektronischen Nachrichten zu bearbeiten hat und die Auslastung eines Teilnehmers aus dem Verhältnis von in seiner Mailbox befindlichen unbearbeiteten Nachrichten zu seiner Vorgabe ermittelt wird. Eingehende Nachrichten werden an mindestens einen Zielteilnehmer weitergeleitet, der noch Kapazitäten bzgl. der Verarbeitung von elektronischen Nachrichten frei hat. Dadurch können möglichst kurze Bearbeitungs- und Antwortzeiten der eingehenden elektronischen Nachrichten sichergestellt werden.

Gemäß einer bevorzugten Ausführungsform der vorliegenden Erfindung wird vorgeschlagen, dass der Verteilplan in Abhängigkeit von der relativen Auslastung der Teilnehmer bestimmt wird. Die Nachrichten werden an mindestens einen Zielteilnehmer weitergeleitet, der relativ zu den anderen Teilnehmern die (prozentual) geringste Auslastung hat. Zur Realisierung dieser Funktionalität einstellbare Parameter sind ein relativer (prozuentaler) Anteil an der Gesamtauslastung und eine Verteilerliste mit einem oder mehreren Zielteilnehmern.

Alternativ wird vorgeschlagen, dass der Verteilplan in Abhängigkeit von der absoluten Auslastung der Teilnehmer bestimmt wird. Die Nachrichten werden an mindestens einen Zielteilnehmer weitergeleitet, dessen absolute Auslastung unterhalb eines vorgebbaren Schwellwerts liegt. Als einstellbare Parameter dienen der Schwellwert und eine Verteilerliste mit einem oder mehreren Zielteilnehmern.

Gemäß einer anderen vorteilhaften Weiterbildung der vorliegenden Erfindung wird vorgeschlagen, dass der Verteilplan in Abhängigkeit von der Zeitdauer bestimmt wird, die eine Nachricht bei einem der Teilnehmer gelagert hat, ohne dass sie angesehen wurde. Die Nachricht wird an mindestens einen ausgewählten Zielteilnehmer weitergeleitet, falls die Zeitdauer einen vorgebbaren Schwellwert übersteigt.

Emails lagern bspw. in einer Mailbox, die auf einem Email-Server für jeden Teilnehmer eines Intranets oder Internets eingerichtet wird. Es wird überwacht, wie lange eine Email ungelesen in der Mailbox liegt. Wird eine vorgebbare Maximalzeit überschritten, wird die betreffende Email automatisch an einen oder mehrere vorgebbare Zielteilnehmer weitergeleitet. Die zur Realisierung dieser Funktionalität einstellbaren Parameter sind die maximale Verweildauer in der Mailbox und eine Verteilerliste mit den ausgewählten Zielteilnehmern für die Weiterleitung.

Gemäß einer anderen bevorzugten Ausführungsform der vorliegenden Erfindung wird vorgeschlagen, dass der Verteilplan in Abhängigkeit von dem Absender der Nachricht bestimmt wird. Die Nachricht wird bspw. an mindestens einen Zielteilnehmer weitergeleitet, der für den Absender zuständig ist oder der die Sprache des Absenders spricht.

Gemäß dieser Ausführungsform ist die nachrichtenbezogene Bedingung, in deren Abhängigkeit der Verteilplan bestimmt wird, der Absender der elektronischen Nachricht. Diese Ausführungsform sieht also eine ursprungsabhängige Verteilung eingehender Nachrichten vor. Die empfangenen elektronischen Nachrichten werden auf ihre Absenderadresse oder auf Teile der Absenderadresse hin untersucht. In Abhängigkeit von den Absenderangaben werden die Nachrichten zu ausgewählten Zielteilnehmern weitergeleitet.

Auf diese Weise kann in einem Unternehmen bspw. eine zentrale Emailadresse für alle Mitarbeiter verwaltet werden, wobei alle elektronischen Nachrichten an diese Emailadresse geschickt werden. Eingehende Emails werden in Abhängigkeit der Absenderangaben an die in einer Verteilerliste festgelegten Mitarbeiter weitergeleitet. Die Absenderadressen können bspw. auf ihre Länderkennung (DE, CH, IT, ...) hin überprüft und die Emails an Mitarbeiter mit entsprechenden Sprachkenntnissen weitergeleitet werden.

Ebenso ist es möglich, bestimmten Mitarbeitern Emails von bestimmten Firmen zuzuordnen und an diese Mitarbeiter weiterzuleiten. Die zur Realisierung dieser Funktionalität einstellbaren Parameter sind eine Liste mit Absenderadressen oder Teilen davon und verschiedene, den jeweiligen Absenderadressen zugeordnete Verteilerlisten mit den entsprechenden Zielteilnehmern.

Gemäß noch einer anderen bevorzugten Ausführungsform der vorliegenden Erfindung wird vorgeschlagen, dass der Verteilplan in Abhängigkeit von dem Eingangsdatum und/oder der Eingangszeit der Nachricht bestimmt wird. Die Nachricht wird an mindestens einen Zielteilnehmer weitergeleitet, der zum Eingangsdatum und zur Eingangszeit der Nachricht erreichbar ist, bspw. während der Geschäfts- oder Büroöffnungszeiten. Dadurch können bei weltweit agierenden Unternehmen, eingehende Emails weltweit an Mitarbeiter in Niederlassungen weitergeleitet werden, die in Zeitzonen liegen, in denen die Niederlassung mit Mitarbeitern besetzt ist. Dadurch kann die Zeit für Bearbeitung und Beantwortung von elektronischen Nachrichten auf ein Minimum reduziert werden.

Gemäß dieser Ausführungsform werden eingehende elektronische Nachrichten zu bestimmten Tageszeiten und/oder an bestimmten Wochentagen oder in bestimmten eingestellten Zeitspannen an ausgewählte Zielteilnehmer umgeleitet. In einer Weiterbildung dieser Ausführungsform ist es denkbar, dass die datums- und/oder zeitabhängige Verteilfunktionalität direkt auf Dienst- oder Urlaubspläne von Mitarbeitern zugreifen kann. Dadurch können die Verteillisten zum Weiterleiten der Nachrichten automatisch auf dem neuesten Stand gehalten werden. Die zur Realisierung dieser Funktionalität einstellbaren Parameter sind Zeitspannen und diesen zugeordnete ausgewählte Zielteilnehmer, ggf. die Dienstpläne der Teilnehmer.

Selbstverständlich sind auch beliebige Kombinationen der oben beschriebenen erweiterten Verteilfunktionalitäten für elektronische Nachrichten denkbar.

Vorteilhafterweise wird mindestens ein Parameter der Bedingung zum Bestimmen des Verteilplans über eine IP (Internet Protocol)-Seite (sog. Webpage) eingestellt. Es ist denkbar, diese IP-Seite über eine Login-ID und ein Passwort vor unbefugtem Zugriff zu schützen. Der mindestens eine Parameter wird vorzugsweise durch Ausfüllen eines elektronischen Formulars auf der IP-Seite eingestellt.

Durch das Einstellen der Verteilfunktionalitäten über eine IP-Seite können die Teilnehmer des Datennetzwerkes die Verteilfunktionalitäten auf besonders einfache Weise einstellen. Ebenso können die Verteilfunktionalitäten von einem zuständigen Administrator des Datennetzwerkes eingestellt werden. Der Administrator erhält Zugang auf die Parameter zum Bestimmen des Verteilplans der einzelnen Teilnehmer und kann diese zentral konfigurieren.

Gemäß noch einer anderen vorteilhaften Weiterbildung der vorliegenden Erfindung wird vorgeschlagen, dass beim Empfang einer Nachricht automatisch eine ursprungsabhängige Antwort generiert und an den Absender der Nachricht übermittelt wird. Gemäß dieser Weiterbildung wird beim Empfang einer elektronischen Nachricht automatisch eine Antwort-Nachricht an den Absender verschickt. Der Inhalt der versendeten Nachricht ist abhängig von der Adresse des Absenders oder von Teilen der Adresse.

Auf diese Weise kann bspw. in Abhängigkeit von der Länderkennung in der Emailadresse des Absenders eine Antwort-Email in der entsprechenden Sprache zurückgesandt werden. In einem anderen Anwendungsfall ist ein automatisierter Abruf von Preislisten für bestimmte Produkte realisierbar. Dabei wird dem Absender automatisch die Preisliste seines Landes zugesandt oder falls das Unternehmen des Absenders besondere Konditionen mit dem adressierten Unternehmen besitzt, bekommt der Absender die für sein Unternehmen gültige Preisliste automatisch zugesandt. Zur Realisierung dieser Funktionalität einstellbare Parameter sind verschiedene Absenderadressen oder Teile davon und diesen zugeordnete Antwort-Nachrichten oder Antwort-Dokumente.

Als eine weitere Lösung der Aufgabe der vorliegenden Erfindung wird ausgehend von einem Server-Computer oder von einem Client-Computer eines Client-Server-Datennetzwerks der eingangs genannten Art vorgeschlagen, dass das Computerprogramm zur Ausführung des erfindungsgemäßen Verfahrens geeignet ist, wenn es auf dem Rechengerät abläuft.

Von besonderer Bedeutung ist die Realisierung des erfindungsgemäßen Verfahrens in der Form eines Speicherelements, das für einen Computer, der Teil eines Clients-Server-Datennetzwerks ist, vorgesehen ist. Dabei ist auf dem Speicherelement ein Computerprogramm abgespeichert, das auf einem Rechengerät, insbesondere auf einem Mikroprozessor, des Computers ablauffähig und zur Ausführung des erfindungsgemäßen Verfahrens geeignet ist. In diesem Fall wird also die Erfindung durch ein auf dem Speicherelement abgespeichertes Computerprogramm realisiert, so dass dieses mit dem Computerprogramm versehene Speicherelement in gleicher Weise die Erfindung darstellt wie das Verfahren, zu dessen Ausführung das Computerprogramm geeignet ist. Als Speicherelement kann insbesondere ein elektrisches Speichermedium zur Anwendung kommen, beispielsweise ein Read-Only-Memory, ein Random-Access-Memory oder ein Flash-Memory.

Die Erfindung betrifft auch ein Computerprogramm, das zur Ausführung des erfindungsgemäßen Verfahrens geeignet ist, wenn es auf einem Rechengerät, insbesondere auf einem Mikroprozessor, abläuft. Besonders bevorzugt ist dabei, wenn das Computerprogramm auf einem Speicherelement, insbesondere auf einem Flash-Memory, abgespeichert ist.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patantansprüchen oder deren Rückbeziehung sowie unabhängig von ihrer Formulierung bzw. Darstellung in der Beschreibung bzw. in der Zeichnung. Es zeigen:
- Figur 1: eine Netzwerkstruktur zur Realisierung des erfindungsgemäßen Verfahrens gemäß einer bevorzugten Ausführungsform;
- Figur 2: einen erfindungsgemäßen Server-Computer eines Datennetzwerks gemäß einer bevorzugten Ausführungsform; und
- Figur 3: ein Ablaufdiagramm eines erfindungsgemäßen Verfahrens gemäß einer bevorzugten Ausführungsform.

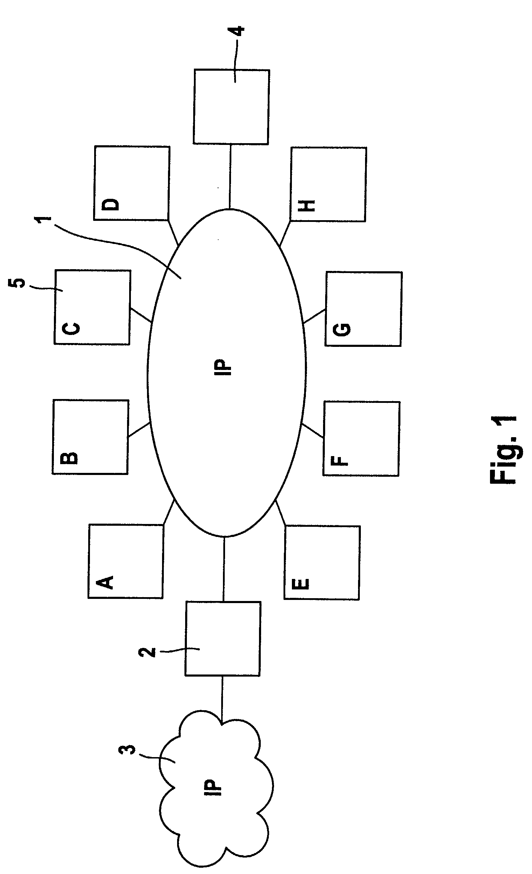

In Figur 1 ist ein Client-Server-Datennetzwerk in seiner Gesamtheit mit dem Bezugszeichen 1 bezeichnet. Bei dem Datennetzwerk 1 handelt es sich um ein unternehmensinternes Intranet, in dem elektronische Nachrichten nach dem IP (Internet Protocol) übertragen werden können. Das Datennetzwerk 1 ist über einen Übergangsrechner 2 (sog. Gateway) an ein weiteres IP-Datennetzwerk 3 angeschlossen ist, das als das frei zugängliche Internet ausgebildet ist. In dem Gateway 2 sind u. a. Mittel zur Beschränkung des Zugangs auf das Datennetzwerk 1 von dem weiteren Datennetzwerk 3 aus vorgesehen. Diese Mittel sind bspw. als eine sog. Firewall ausgebildet, durch die sichergestellt wird, dass ausschließlich berechtigte Personen Zugriff auf das firmeninterne Datennetzwerk 1 erhalten.

An das Datennetzwerk 1 ist ein Server-Computer 4 angeschlossen, der als ein Email-Server ausgebildet ist. Des weiteren sind an das Datennetzwerk 1 acht Client-Computer A bis H angeschlossen, die als Email-Clients 5 ausgebildet sind. Jeder Email-Client 5 ist mindestens einem Mitarbeiter des Unternehmens bzw. mindestens einem Teilnehmer des Intranets 1 zugeordnet.

An Mitarbeiter des Unternehmens adressierte Emails werden üblicherweise aus dem Internet 3 über das Gateway 2 an den Email-Server 4 des Intranets 1 übermittelt und dort gespeichert. Alternativ können Emails auch zwischen Mitarbeitern des gleichen Unternehmens innerhalb des Intranets 1 versandt werden, wobei sie auch dann an den Email-Server 4 übermittelt und dort gespeichert werden. Auf dem Email-Server 4 sind den Teilnehmern des Intranets 1 zugeordnete Mailboxen eingerichtet, auf die die Emails in Abhängigkeit von der Email-Adresse verteilt werden.

Von den Mailboxen werden die Emails entweder von den Email-Clients 5 automatisch oder auf Befehl eines Teilnehmers abgeholt. Alternativ zur Nutzung von speziellen Email-Clients 5 kann zur Abfrage der Mailbox auch ein herkömmlicher Webbrowser herangezogen werden.

Aus dem Stand der Technik sind Verfahren zum automatischen Verteilen von Emails über das Intranet 1 und/oder das Internet 3 an Teilnehmer des Intranet 1 und/oder des Internets 3 bekannt. Bei den bekannten Verfahren wird ein Verteilplan bestimmt. In Abhängigkeit von dem Verteilplan wird mindestens ein Zielteilnehmer unter allen Teilnehmern des Intranets 1 ausgewählt. Eingehende Emails werden an den oder jeden ausgewählten Zielteilnehmer übermittelt. Die bekannten Funktionalitäten zum Verteilen von Emails beschränken sich jedoch auf unbedingtes Weiterleiten von Emails und unbedingtes Senden einer Antwort-Nachricht auf eine Email.

Gemäß der vorliegenden Erfindung werden erweiterte Funktionalitäten zum Verteilen von Emails vorgeschlagen. Dadurch können die Bearbeitungs- und Antwortzeiten auf Emails deutlich verringert werden. Insbesondere wird vorgeschlagen, die Emails nach einem Verteilplan zu verteilen, der in Abhängigkeit davon bestimmt wird, ob vorgebbare teilnehmer- oder nachrichtenbezogene Bedingungen erfüllt sind oder nicht. Je nach dem, ob die Bedingungen erfüllt sind oder nicht, werden eingehende Emails in die Mailboxen von ausgewählten Zielteilnehmern umgeleitet, von einer Mailbox in die Mailboxen von ausgewählten Zielteilnehmern weitergeleitet oder einfach eine individuelle Antwort-Nachricht, deren Inhalt abhängig ist von den Bedingungen, in die Mailboxen von ausgewhlten Zielteilnehmern übermittelt.

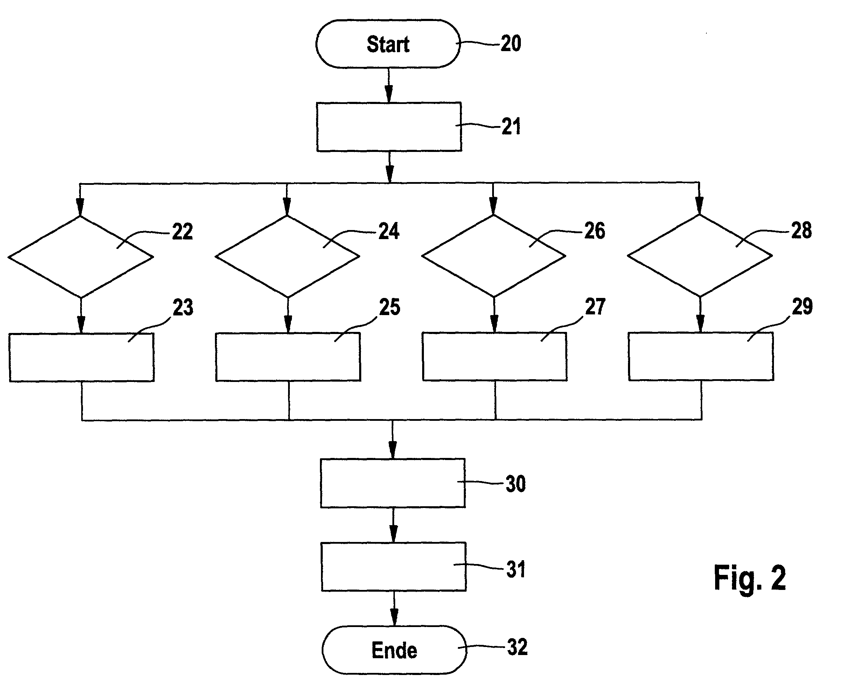

In Figur 2 ist ein Ablaufdiagramm eines erfindungsgemäßen Verfahrens gemäß einer bevorzugten Ausführungsform dargestellt. Das Verfahren beginnt in einem Funktionsblock 20. In einem Funktionsblock 21 geht eine Email in den Email-Server 4 ein. Diese wird dann nach dem erfindungsgemäßen Verfahren umgeleitet, weitergeleitet oder automatisch beantwortet.

In einem Abfrageblock 22 wird die Auslastung der einzelnen Mitarbeiter des Unternehmens überprüft. Anschließend wird in einem Funktionsblock 23 der Verteilplan in Abhängigkeit von der Auslastung der Mitarbeiter bestimmt. Gemäß dem Verteilplan wird eingegangene Email an den- oder diejenigen Mitarbeiter umgeleitet, die die geringste Auslastung haben (bei der Betrachtung der relativen Auslastung) oder deren Auslastung absolut gesehen unterhalb eines vorgebaren Schwellwerts liegt. Zur Realisierung dieser Funktionalität einstellbare Parameter sind ein relativer (prozuentaler) Anteil an der Gesamtauslastung bzw. der Schwellwert und eine Verteilerliste mit einem oder mehreren Mitarbeitern.

Alternativ oder zusätzlich wird in einem Abfrageblock 24 überprüft, wie lange eine eingegangene Email bereits in einer Mailbox abgelegt ist, ohne dass sie von dem Mitarbeiter, dem die Mailbox zugeordnet ist, angesehen wurde. In einem Funktionsblock 25 wird der Verteilplan dann in Abhängigkeit von der Verweildauer bestimmt. Gemäß dem Verteilplan wird die Email an einen ausgewählten Mitarbeiter weitergeleitet, falls die Verweildauer einen vorgebbaren Schwellwert übersteigt. Die zur Realisierung dieser Funktionalität einstellbaren Parameter sind die maximale Verweildauer in der Mailbox und eine Verteilerliste mit ausgewählten Mitarbeitern für die Weiterleitung.

Alternativ oder zusätzlich wird in einem Abfrageblock 26 die Emailadresse des Absenders der Email oder Teile davon überprüft. In einem Funktionsblock 27 wird der Verteilplan dann in Abhängigkeit von dem Absender der Email bestimmt. Gemäß dem Verteilplan wird die Email an einen Mitarbeiter in dem Unternehmen weitergeleitet, der bspw. den Absender der Email üblicherweise betreut oder der die Sprache des Absenders spricht. Die zur Realisierung dieser Funktionalität einstellbaren Parameter sind eine Liste mit Absenderadressen oder Teilen davon und verschiedene, den jeweiligen Absenderadressen zugeordnete Verteilerlisten mit den entsprechenden Mitarbeitern.

Alternativ oder zusätzlich wird in einem Abfrageblock 28 das Eingangsdatum und/oder die Eingangszeit der Email überprüft. In einem Funktionsblock 29 wird der Verteilplan dann in Abhängigkeit von dem Eingangsdatum und/oder der Eingangszeit der Email bestimmt. Gemäß dem Verteilplan wird die Email an einen Mitarbeiter in dem Unternehmen weitergeleitet, der momentan erreichbar ist bspw. während der Geschäfts- oder Büroöffnungszeiten. Die zur Realisierung dieser Funktionalität einstellbaren Parameter sind Zeitspannen und diesen zugeordnete Verteilerlisten mit ausgewählten Mitarbeitern.

In einem Funktionsblock 30 wird die eingegangene Email dann in Abhängigkeit von dem in den Funktionsblöcken 23, 25, 27 und/oder 29 erstellten Verteilplan an den oder die ausgewählten Mitarbeiter bzw. an deren Mailboxen verteilt. Dort können wiederum die oben beschriebenen erweiterten Funktionalitäten zum Verteilen von Emails zur Anwendung kommen, so dass es auch zu einer Mehrfach-Weiterleitung der Email kommen kann. Um zu verhindern, dass die gleiche Email einem Mitarbeiter mehrfach zugestellt wird, was auf dem gleichen oder unterschiedlichen Verteilerwegen geschehen kann, können entsprechende zusätzliche Funktionalitäten vorgesehen werden. Außerdem sind zusätzliche Funktionalitäten denkbar, die ein Weiterleiten einer Email im Kreis verhindern.

In einem Funktionsblock 31 wird automatisch eine ursprungsabhängige Antwort-Nachricht generiert und an den Absender der Email übermittelt. Dazu werden die in dem Abfrageblock 26 erfassten Angaben über den Absender der Email herangezogen. Der Inhalt der versendeten Antwort-Nachricht ist abhängig von der Adresse des Absenders oder von Teilen der Adresse.

Zur leichteren Bedienung der erweiterten Verteilfunktionalitäten werden die Parameter der Bedingung zum Bestimmen des Verteilplans über eine IP (Internet Protocol)-Seite (sog. Webpage) eingestellt. Die Parameter werden vorzugsweise durch Ausfüllen eines elektronischen Formulars auf der IP-Seite eingestellt.

In einem Funktionsblock 32 ist das erfindungsgemäße Verfahren beendet. Sobald eine neue Email bei dem Email-Server 4 eingeht, beginnt es wieder von vorne. Selbstverständlich sind auch beliebige Kombinationen der oben beschriebenen erweiterten Verteilfunktionalitäten für elektronische Nachrichten denkbar.

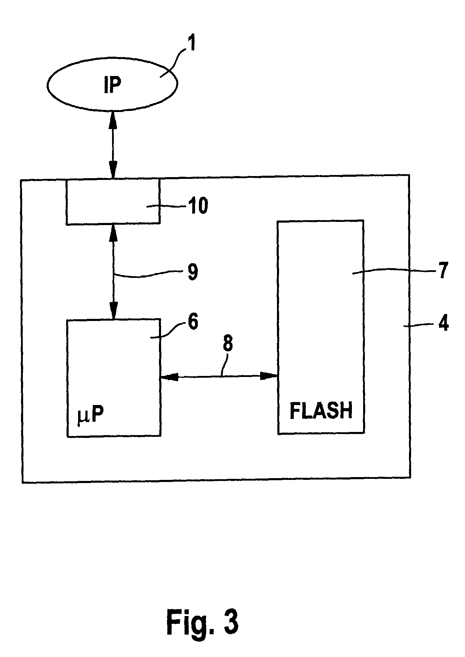

In Figur 3 ist ein erfindungsgemäßer Server-Computer 4 des Datennetzwerks 1 dargestellt. Der Computer 4 umfasst ein Rechengerät 6, das bspw. als ein Mikroprozessor ausgebildet ist. Außerdem umfasst er ein Speicherelement 7, das bspw. als ein Flash-Memory ausgebildet ist. Auf dem Speicherelement 7 ist ein Computerprogramm abgespeichert, das auf dem Rechengerät 6 ablauffähig ist. Das Computerprogramm ist zur Ausführung des erfindungsgemäßen Verfahrens geeignet, wenn es auf dem Rechengerät 6 abläuft. Zur Ausführung des Computerprogramms wird das gesamte Computerprogramm oder einzelne Befehle davon über eine Datenübertragungsverbindung 8 von dem Speicherelement 7 an das Rechengerät 6 übertragen. Das Rechengerät 6 steuert über eine Datenübertragungsverbindung 9 außerdem eine Schnittstelle 10, über die der Server-Computer 4 an das Datennetzwerk 1 angeschlossen ist.

Ein erfindungsgemäßer Client-Computer 5 entspricht von seinem Aufbau her in etwa dem in Figur 3 dargestellten Server-Computer 4. Der Computer 5 umfasst ein Rechengerät und ein Speicherelement. Auf dem Speicherelement ist ein Computerprogramm abgespeichert, das auf dem Rechengerät ablauffähig und zur Ausführung des erfindungsgemäßen Verfahrens geeignet ist. Der Computer 5 ist ebenfalls über eine Schnittstelle an das Datennetzwerk 1 angeschlossen.

## Patentansprüche

1. Verfahren zum automatischen Verteilen einer elektronischen Nachricht über ein Datennetzwerk (1) an Teilnehmer des Datennetzwerks (1), mit den Schritten:
a) Bestimmen eines Verteilplans (23, 25, 27, 29);
b) Auswählen mindestens eines Zielteilnehmers unter allen Teilnehmern des Datennetzwerks (1) in Abhängigkeit von dem Verteilplan; und
c) Übermitteln der Nachricht an den oder jeden ausgewählten Zielteilnehmer (30),
**dadurch gekennzeichnet, dass** der Verteilplan in Abhängigkeit davon bestimmt wird, ob vorgebbare teilnehmer- oder nachrichtenbezogene Bedingungen erfüllt sind (22, 24, 26, 28).

2. Verfahren nach Anspruch 1, **dadurch gekennzeichnet, dass** der Verteilplan in Abhängigkeit von der Auslastung der Teilnehmer bestimmt wird (22).

3. Verfahren nach Anspruch 2, **dadurch gekennzeichnet, dass** der Verteilplan in Abhängigkeit von der relativen Auslastung der Teilnehmer bestimmt wird.

4. Verfahren nach Anspruch 2, **dadurch gekennzeichnet, dass** der Verteilplan in Abhängigkeit von der absoluten Auslastung der Teilnehmer bestimmt wird.

5. Verfahren nach einem der Ansprüche 1 bis 4, **dadurch gekennzeichnet, dass** der Verteilplan in Abhängigkeit von der Zeitdauer bestimmt wird, die eine Nachricht bei einem der Teilnehmer gelagert hat, ohne dass sie angesehen wurde (24).

6. Verfahren nach einem der Ansprüche 1 bis 5, **dadurch gekennzeichnet, dass** der Verteilplan in Abhängigkeit von dem Absender der Nachricht bestimmt wird (26).

7. Verfahren nach einem der Ansprüche 1 bis 6, **dadurch gekennzeichnet, dass** der Verteilplan in Abhängigkeit von dem Eingangsdatum und/oder der Eingangszeit der Nachricht bestimmt wird (28).

8. Verfahren nach einem der Ansprüche 1 bis 7, **dadurch gekennzeichnet, dass** mindestens ein Parameter der Bedingung zum Bestimmen des Verteilplans über eine IP (Internet Protocol)-Seite eingestellt wird.

9. Verfahren nach Anspruch 8, **dadurch gekennzeichnet, dass** der mindestens eine Parameter durch Ausfüllen eines elektronischen Formulars auf der IP-Seite eingestellt wird.

10. Verfahren nach einem der Ansprüche 1 bis 9, **dadurch gekennzeichnet, dass** beim Empfang einer Nachricht automatisch eine ursprungsabhängige Antwort generiert und an den Absender der Nachricht übermittelt wird (31).

11. Server-Computer (4) eines Datennetzwerks (1), umfassend ein Rechengerät (6), insbesondere einen Mikroprozessor, und ein Speicherelement (7), insbesondere ein Random-Access-Memory, ein Read-Only-Memory oder ein Flash-Memory, auf dem ein Computerprogramm abgespeichert ist, das auf dem Rechengerät (6) ablauffähig ist, **dadurch gekennzeichnet, dass** das Computerprogramm zur Ausführung eines Verfahrens nach einem der Ansprüche 1 bis 10 geeignet ist, wenn es auf dem Rechengerät (6) abläuft.

12. Client-Computer (5) eines Datennetzwerks (1), umfassend ein Rechengerät (6), insbesondere einen Mikroprozessor, und ein Speicherelement (7), insbesondere ein Random-Access-Memory, ein Read-Only-Memory oder ein Flash-Memory, auf dem ein Computerprogramm abgespeichert ist, das auf dem Rechengerät (6) ablauffähig ist, **dadurch gekennzeichnet, dass** das Computerprogramm zur Ausführung eines Verfahrens nach einem der Ansprüche 1 bis 10 geeignet ist, wenn es auf dem Rechengerät (6) abläuft.

13. Speicherelement (7), insbesondere Random-Access-Memory, Read-Only-Memory oder Flash-Memory, für einen Computer (4, 5), der Teil eines Client-Server-Datennetzwerks (1) ist, wobei auf dem Speicherelement (7) ein Computerprogramm abgespeichert ist, das auf einem Rechengerät (6), insbesondere auf einem Mikroprozessor, des Computers (4, 5) ablauffähig ist, **dadurch gekennzeichnet, dass** das Computerprogramm zur Ausführung eines Verfahrens nach einem der Ansprüche 1 bis 10 geeignet ist, wenn es auf dem Rechengerät (6) abläuft.

14. Computerprogramm, das auf einem Rechengerät (6), insbesondere auf einem Mikroprozessor, eines Computers (4, 5) ablauffähig ist, **dadurch gekennzeichnet, dass** das Computerprogramm zur Ausführung eines Verfahrens nach einem der Ansprüche 1 bis 10 geeignet ist, wenn es auf dem Rechengerät (6) abläuft.

15. Computerprogramm nach Anspruch 14, **dadurch gekennzeichnet, dass** das Computerprogramm auf einem Speicherelement (7), insbesondere auf einem Flash-Memory, abgespeichert ist.
